(19) **Europäisches Patentamt**

**European Patent Office**

**Office européen des brevets**

(11) Veröffentlichungsnummer: **0 389 882**

**A2**

(12) **EUROPÄISCHE PATENTANMELDUNG**

(21) Anmeldenummer: **90104953.6**

(22) Anmeldetag: **16.03.90**

(51) Int. Cl.5: **C08G 18/00**

(30) Priorität: **29.03.89 DE 3910102**

(43) Veröffentlichungstag der Anmeldung:
**03.10.90 Patentblatt 90/40**

(84) Benannte Vertragsstaaten: .
**AT DE ES FR GB IT**

(71) Anmelder: **BAYER AG**

**D-5090 Leverkusen 1 Bayerwerk(DE)**

(72) Erfinder: **Brock, Martin, Dr.**
**Silesiusstrasse 82**
**D-5000 Köln 80(DE)**
Erfinder: **Kogelnik, Hans-Joachim, Dr.**
**1247 Rolling Meadow Road**
**Pittsburgh, PA(US)**
Erfinder: **Wolf, Klaus-Dieter, Dr.**
**Andreas-Gryphius Strasse 22**
**D-5000 Köln 80(DE)**

(54) **Verfahren zur Herstellung von heisshärtenden Polyurethan-Weichformschaumstoffen.**

(57) Heißhärtende Polyurethan-Weichformschaumstoffe werden durch Umsetzung von

a) Polyisocyanaten vom Typ des Diphenylmethan-diisocyanats und/oder des Toluylendiisocyanats und/oder Hexamethylendiisocyanats und/oder Isophorondiisocyanats mit

b) Verbindungen mit mindestens zwei gegenüber Isocyanaten aktiven Wasserstoffatomen vom Molekulargewicht 400 bis 10.000 und gegebenenfalls

c) Kettenverlängerungs- und Vernetzungsmitteln mit mindestens zwei gegenüber Isocyanaten aktiven Wasserstoffatomen vom Molekulargewicht 32 - 399 in Gegenwart von

d) Wasser als Treibmittel in einer Menge von 5 bis 15 Gew.-Teilen, vorzugsweise 6 - 32 Gew.-Teilen, bezogen auf 100 Gew.-Teile der Komponente b) und gegebenenfalls in Gegenwart von

e) anderen Treibmitteln, Katalysatoren und weiteren an sich bekannten Hilfs- und Zusatzmitteln in einer geschlossenen Form hergestellt, wobei die Umsetzung aller Komponenten bei einer Kennzahl von unter 90, vorzugsweise 60-80, durchgeführt wird.

EP 0 389 882 A2

## Verfahren zur Herstellung von heißhärtenden Polyurethan-Weichformschaumstoffen

Heißhärtende Polyurethan-Weichformschaumstoffe finden bekanntlich eine sehr verbreitete Anwendung und werden u. a. auch im Automobilbereich und in der Möbelindustrie genutzt. Die Qualität der beim Einsatz als Sitz- bzw. Lehnenpolster üblichen Polyurethan-Weichformschaumstoffe wird weitestgehend von ihrer Rohdichte bestimmt. Unabhängig von der Art der zur Herstellung von Heißformschaumstoffen einsetzbaren Basisrohstoffe (Polyole/Isocyanate) hat sich für die verschiedenen Anwendungen und die damit verbundenen Anforderungen, besonders jedoch hinsichtlich möglichst günstiger Dauergebrauchseigenschaften, ein bestimmtes Rohdichteniveau als zweckmäßig und praxisgerecht erwiesen.

Für die zu erzielende Rohdichte ist hauptsächlich der Wassergehalt der Rohstoffkombination bestimmend, wobei je nach angestrebtem Rohdichteniveau Wassermengen bis zu 5 (üblicherweise 2,5 - 3,5) Gew.-Tle. pro 100 Tle. Polyol als typisch gelten.

Wie sich gezeigt hat, lassen sich die je nach Schaumanwendung oftmals aus Gründen einer Gewichts- und Kostenersparnis angestrebten niedrigeren Rohdichten nur in Ausnahmefällen durch Steigerung des Wassergehaltes über die angegebenen Mengen hinaus realisieren. Der Grund dafür liegt in der Tatsache, daß mit zunehmendem Wasseranteil (> 3,5 Gew.-Tle. pro 100 Gew.-Tle. Polyol) die für den Schäumprozeß unerläßliche katalytische Abstimmung der chemischen Reaktionen (Polymerbildung/Gasbildung) schwieriger und der Verarbeitungsspielraum insgesamt stark eingeengt wird. Neben Problemen bezüglich Hautbeschaffenheit (Formentemperatur/Trennmittel) und Schaumstabilität resultiert insbesondere auch eine Beeinträchtigung ( = Beschränkung) des Kennzahl-Spielraumes. Aus diesen Gründen werden gewünschte bzw. erforderliche Erniedrigungen der Rohdichte vorzugsweise durch die Mitverwendung physikalisch wirkender Treibmittel (z. B. Halogenkohlenwasserstoffe) verwirklicht. Diese Verfahrensweise ist Stand der Technik und gilt im Prinzip für alle Heißformschaumstoffe.

Diese Methode ist allerdings ebenfalls vor allem aus Gründen des Umweltschutzes nicht zu befürworten.

Überraschend wurde nun gefunden, daß atypisch hohe Wassermengen von mehr als 5,0 Gew.-Tln. pro 100 Gew.-Tle. "Basispolyol" problemlos verarbeitet und als Folge davon bei heißhärtendem Polyurethan-Weichformschaum Rohdichten von bis herab zu 15 kg/m³ erreicht werden können, wenn abweichend vom bislang als praxisüblich geltenden Kennzahlbereich (95 - 105) eine normalerweise prohibitiv niedrige Kennzahl von weniger als 90 zur Verschäumung gewählt wird.

Aus der GB-PS 892 776 ist zwar bereits bekannt geworden, harte oder halbharte Polymerschaumstoffe durch Umsetzung von 100 Gew.-Teilen eines monomeren organischen Polyisocyanats mit 1 bis 30 Gew.-Teilen Wasser in Gegenwart eines oberflächenaktiven Mittels und eines Katalysators, vorzugsweise in Gegenwart von 5 bis 30 Gew.-Teilen einer polyfunktionellen Verbindung mit zwei oder mehr als zwei isocyanatreaktiven Gruppen, herzustellen. Wie jedoch aus den Ansprüchen und auch aus den Beispielen dieser GB-PS zu entnehmen ist, handelt es sich bei den verwendeten "Katalysatoren" um anorganische Produkte des Kaliumacetat bzw. Natriumhydroxid, so daß ein überwiegend von Trimerisierungsreaktionen bestimmter Schäumungsablauf erzwungen wird und das Prinzip der erfindungsgemäß einzuhaltenden niedrigen Kennzahlen nicht zum Tragen kommt.

Gegenstand der Erfindung ist ein Verfahren zur Herstellung von heißhärtenden Polyurethan-Weichformschaumstoffen durch Umsetzung von

a) Polyisocyanaten mit

b) Verbindungen mit mindestens zwei gegenüber Isocyanaten aktiven Wasserstoffatomen vom Molekulargewicht 400 - 10.000 und gegebenenfalls

c) Kettenverlängerungs- und Vernetzungsmitteln mit mindestens zwei gegenüber Isocyanaten aktiven Wasserstoffatomen vom Molekulargewicht 32 - 399 in Gegenwart von

d) Wasser als Treibmittel und gegebenenfalls in Gegenwart von

e) anderen Treibmitteln, Katalysatoren und weiteren an sich bekannten Hilfs- und Zusatzmitteln in einer geschlossenen Form, das dadurch gekennzeichnet ist, daß

1. als Polyisacyanate a) solche vom Typ des Diphenylmethan-diisocyanats und/oder des Toluylendiisocyanats und/oder Hexamethylendiisocyanats und/oder Isophorondiisocyanats, und

2. als Treibmittel d) Wasser in einer Menge von 5 bis 15 Gew.-Teilen, vorzugsweise 6 - 12 Gew.-Teilen, bezogen auf 100 Gew.-Teile der Komponente b) verwendet werden, wobei

3. die Umsetzung aller Komponten bei einer Kennzahl von unter 90, vorzugsweise 60 - 80, durchgeführt wird.

Zur Herstellung der heißhärtenden Polyurethan-Weichformschaumstoffe werden erfindungsgemäß als Ausgangskomponenten verwendet:

2

1. Polyisocyanate vom Typ des Diphenylmethandiisocyanats und/oder des Toluylendiisocyanats, z. B. das 2,4- und 2,6-Toluylendiisocyanat, sowie beliebige Gemische dieser Isomeren ("TDI"); 4,4'-und/oder 2,4'-Diphenylmethandiisocyanat ("MDI"), Hexamethylendiisocyanat und/oder Isophorondiisocyanat, Polyphenylpolymethylen-polyisocyanate, wie sie durch Anilin-Formaldehyd-Kondensation und anschließende Phosgenierung hergestellt werden ("rohes MDI"), ferner durch Carbodiimidgruppen, Urethangruppen, Allophanatgruppen, Isocyanuratgruppen, Harnstoffgruppen oder Biuretgruppen modifizierte Polyisocyanate, die sich vom 2,4-und/oder 2,6-Toluylendiisocyanat bzw. vom 4,4'-und/oder 2,4' Diphenylmethandiisocyanat und/oder Hexamethylendiisocyanat und/oder Isophorondiisocyanat ableiten, ferner alkylsubstituierte MDI-Typen, wie sie beispielsweise in DE-OS 2 935 318, DE-OS 3 032 128 und DE-OS 3 032 358 beschrieben werden.

Ferner kommen vorzugsweise folgende TDI-Typen erfindungsgemäß in Betracht:
- Toluylendiisocyanat als Gemisch der 2,4- und 2,6-Isomeren im Verhältnis 80 : 20 (T 80)
- Toluylendiisocyanat als Gemisch der 2,4- und 2,6-Isoameren im Verhältnis 65 : 35 (T 65)
- Toluylendiisocyanat-Prepolymere
- Abmischungen von TDI mit Diphenylmethandiisocyanat und/oder Polyphenylpolymethylen-polyisocyanaten.

2. Verbindungen mit mindestens zwei gegenüber Isocyanaten reaktionsfähigen Wasserstoffatomen von einem Molekulargewicht in der Regel von 400 -10.000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1.000 bis 6.000, vorzugsweise 2.000 bis 6.000, z. B. mindestens zwei, in der Regel zwei bis acht, vorzugsweise aber 2 bis 6, Hydroxylgruppen aufweisende Polyether, Polyester, Polycarbonate und Polyesteramide, wie sie für die Herstellung von homogenen und von zellförmigen Polyurethanen an sich bekannt sind und wie sie z. B. in der DE-OS 2 832 253, Seiten 11 -18, beschrieben werden. Vorzugsweise weisen sie eine OH-Zahl von 28 bis 56 auf.

3. Gegebenenfalls Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 10 -20, beschrieben.

4. Wasser als Treibmittel in einer Menge von 5 bis 15 Gew.-Teilen, vorzugsweise 6 - 12 Gew.-Teilen, pro 100 Gew.-Teile "Basispolyol" b)

5. Gegebenenfalls werden Hilfs- und Zusatzmittel mitverwendet wie
a) leicht flüchtige organische Substanzen als weitere Treibmittel,
b) Reaktionsbeschleuniger und Reaktionsverzögerer der an sich bekannten Art in den an sich üblichen Mengen,
c) oberflächenaktive Zusatzstoffe, wie Emulgatoren und Schaumstabilisatoren,
ferner Zellregler der an sich bekannten Art wie Paraffine oder Fettalkohole oder Dimethylpolysi loxane sowie Pigmente oder Farbstoffe und Flammschutzmittel der an sich bekannten Art, z. B. Trischlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Diese gegebenenfalls mitzuverwendenden Hilfs- und Zusatzstoffe werden beispielsweise in der DE-OS 2 732 292, Seiten 21 - 24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z B. auf den Seiten 103-113 beschrieben.

Durchführung des erfindungsgemäßen Verfahrens:

Die Reaktionskomponenten werden erfindungsgemäß nach dem an sich bekannten Einstufenverfahren, dem Präpolymerverfahren oder dem Semipräpolymerverfahren zu Umsetzung gebracht, wobei man sich oft maschineller Einrichtungen bedient, z. B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z. B. auf den Seiten 121-205, beschrieben.

Die Umsetzung aller Komponenten erfolgt erfindungsgemäß bei einer Kennzahl unter 90, vorzugsweise bei einer Kennzahl von 60 - 80.

Die Kennzahl, ein bei der Herstellung von Polyurethanschaumstoffen sehr häufig verwendeter Begriff, sagt etwas über den Vernetzungsgrad eines Schaumstoffs aus, Es ist Gepflogenheit, denjenigen Schaumstoff als mit der Kennzahl 100 gefertigt zu betrachten, bei welchem die den stöchiometrischen Verhältnissen entsprechende, bzw. die theoretisch notwendige Menge an Isocyanat benutzt wurde. Mit Hilfe der Kennzahl ist es also möglich, den Grad der Unter-oder Übervernetzung näher zu definieren. Die Kennzahl errechnet sich nach der allgemeinen Formel wie folgt:

$$\text{Kennzahl} = \frac{\text{Isocyanatmenge (praktisch) x 100}}{\text{Isocyanatmenge (theoretisch)}}$$

Erfindungsgemäß wird die Verschäumung in geschlossenen Formen durchgeführt. Dabei wird das Reaktionsgemisch in eine Form eingetragen. Als Formmaterial kommt Metall, z. B. Aluminium oder Kunststoff, z. B. Epoxidharz, infrage. In der Form schäumt das schäumfähige Reaktionsgemisch auf und bildet den Formkörper. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktiansgemisch in die Form einträgt, als zur Auffüllung des Forminneren mit Schaumstoff notwendig ist. Im letztgenannten Fall wird somit unter "over-charging" gearbeitet; eine derartige Verfahrensweise ist z. B. aus den US-Patentschriften 3 178 490 und 3 182 104 bekannt.

Die erfindungsgemäß erhältlichen heißhärtenden Polyurethan-Weichformschaumstoffe finden z. B. Anwendung als Armaturentafeln, Armlehnen (auch PKW-Lehnen), Liege-und Sitzmöbel, Kopfstützen, Sitze in Verkehrsmitteln, vorzugsweise im Auto.

Ausführungsbeispiele

Polyether A ein Glycerin-gestarteter trifunktioneller, langkettiger PO/EO-Polyether (ca. 15 % EO), OHZ = 36; MG 4800

Polyether B ein Glycerin-gestarteter trifunktioneller, langkettiger PO/EO-Polyether (ca. 10 % EO), OHZ = 50 ; MG 3900

Katalysator 1 Bis-N,N'-dimethyl-amino-diethylether (30 %), Dipropylenglykol (70 %)

Katalysator 2 T80 Zinn(II)octoat

Toluylendiisocyanat, Gemisch aus 2,4- und 2,6-Isomeren im Gew.-Verhältnis 80:20 %

Alle Komponenten werden intensiv miteinander vermischt und in einer geschlossenen Form (22x22x7 cm) verschäumt.

| | Beispiel 1 | Beispiel 2 |
|---|---|---|
| Polyether A | 70 Gew.-Tle. | 65 Gew.-Tle. |
| Polyether B | 30 Gew.-Tle. | 35 Gew.-Tle. |
| Wasser | 7,0 Gew.-Tle. | 8,0 Gew.-Tle. |
| Schaumstabilisator OS 32 (Bayer AG) (Polyetherpolysiloxan) | 1,5 Gew.-Tle. | 1,5 Gew.-Tle. |
| Katalysator 1 | 0,2 Gew.-Tle. | 0,2 Gew.-Tle. |
| Katalysator 2 | 0,4 Gew.-Tle. | 0,4 Gew.-Tle. |
| TDI 80 | X[*)] | X[*)] |
| Kennzahl | 80 | 75 |
| Rohdichte | 24 kg/m$^3$ | 22 kg/m$^3$ |
| Stauchhärte (bei 40 % Verformung) | 3,2 KPa | 3,4 KPa |

[*)] Menge entsprechend der Kennzahl

**Ansprüche**

Verfahren zur Herstellung von heißhärtenden Polyurethan-Weichformschaumstoffen durch Umsetzung von

a) Polyisocyanaten mit

b) Verbindungen mit mindestens zwei gegenüber Isocyanaten aktiven Wasserstoffatomen vom Molekulargewicht 400 bis 10.000 und gegebenenfalls

c) Kettenverlängerungs- und Vernetzungsmitteln mit mindestens zwei gegenüber Isocyanaten aktiven Wasserstoffatomen vom Molekulargewicht 32 - 399 in Gegenwart von

d) Wasser als Treibmittel und gegebenenfalls in Gegenwart von

e) anderen Treibmitteln, Katalysatoren und weiteren an sich bekannten Hilfs- und Zusatzmitteln

in einer geschlossenen Form, dadurch gekennzeichnet, daß

1. als Polyisocyanate a) solche vom Typ des Diphenylmethan-diisocyanats und/oder des Toluylendiisocyanats und/oder Hexamethylendiisocyanats und/oder Isophorondiisocyanats, und

2. als Treibmittel d) Wasser in einer Menge von 5 bis 15 Gew.-Teilen, vorzugsweise 6 - 12 Gew.-Teilen, bezogen auf 100 Gew.-Teile der Komponente b)

verwendet werden, wobei

3. die Umsetzung aller Komponenten bei einer Kennzahl von unter 90, vorzugsweise 60-80, durchgeführt wird.